# FASCICULE DE BREVET EUROPEEN

(11) **EP 2 766 278 B1**
(45) Date de publication et mention de la délivrance du brevet: **14.08.2019**
(21) Numéro de dépôt: 12755868.2
(22) Date de dépôt: 06.09.2012
(51) Int. Cl.: B65D 75/32, B60S 1/38

(54) **DISPOSITIF D'EMBALLAGE ET EMBALLAGE POUR BALAI D'ESSUIE-GLACE A LAME COURBE ET STRUCTURE FLEXIBLE INTEGREE**
VERPACKUNGSVORRICHTUNG UND VERPACKUNG FÜR EIN WISCHERBLATT MIT EINEM GEKRÜMMTEN BLATT UND EINER INTEGRIERTEN FLEXIBLEN STRUKTUR
PACKAGING DEVICE AND PACKAGING FOR A WIPER BLADE COMPRISING A CURVED BLADE AND AN INTEGRATED FLEXIBLE STRUCTURE

(30) Priorité: 06.09.2011 FR 1157899
(43) Date de publication de la demande: 20.08.2014
(73) Titulaire: Valeo Systèmes d'Essuyage, 78322 Le Mesnil Saint Denis (FR)
(72) Inventeur: JEHANNET, Jean-Pierre, F-27200 Vernon (FR); VERET, Jocelyn, F-27150 Etrepagny (FR)
(74) Mandataire: Callu-Danseux, Violaine
(86) Numéro de dépôt international: PCT/EP2012/067365
(87) Numéro de publication internationale: WO 2013/034619

(56) Documents cités:
- WO-A1-2010/022949
- DE-U1-202007 005 987
- FR-A1- 2 859 713
- FR-A1- 2 918 024
- FR-A1- 2 927 615

## Description

La présente invention concerne un dispositif d'emballage destiné au conditionnement d'un balai d'essuie-glace doté d'une lame courbe à structure flexible intégrée. L'emballage logeant le balai d'essuie-glace trouve par exemple une application dans le domaine des pièces de rechange pour véhicule automobile.

Certains balais d'essuie-glace ont la particularité d'être dépourvus de structures à palonniers, contrairement aux balais droits communément employés à l'heure actuelle. Ces balais disposent toujours d'une lame racleuse souple, mais l'armature externe chargée de la supporter est remplacée par une structure flexible qui est directement intégrée à la lame. L'ensemble est agencé de manière à ce qu'au repos, la lame présente longitudinalement une forme concave dans son plan sagittal, mais qu'au contact d'une surface à essuyer, ladite lame soit en mesure de se redresser par déformation élastique de sa structure flexible afin d'épouser au mieux ladite surface tout au long de son déplacement.

Du fait précisément de sa forme incurvée, un balai d'essuie-glace à lame courbe présente au repos un encombrement supérieur à son homologue à structure à palonniers et lame droite. Son conditionnement s'avère par conséquent beaucoup plus problématique dans la mesure où il n'est pas concevable d'utiliser un simple blister de forme complémentaire. Le volume de l'emballage se doit en effet d'être relativement réduit pour des raisons essentiellement de coûts de fabrication, de protection de l'environnement et de logistique.

Pour remédier à cette difficulté, il est connu d'utiliser un conditionnement doté de moyens de maintien à même d'immobiliser le balai à l'intérieur d'un logement, dans une position au moins partiellement redressée par rapport à sa position de repos.

La demande internationale WO 2005/026005 décrit notamment un dispositif d'emballage pour balai d'essuie-glace à lame courbe et structure flexible intégrée, comportant un logement destiné à recevoir le balai, ainsi que des moyens de maintien chargés d'immobiliser le balai à l'intérieur du logement dans une position pouvant être au moins partiellement redressée par rapport à sa position de repos.

Le document FR 2 918 024 A1 montre un dispositif d'emballage selon le préambule de la première revendication.

Les moyens de maintien comportent une première surface d'appui apte à coopérer par contact avec une portion de la partie supérieure du balai, une seconde surface d'appui apte à coopérer par contact avec une première portion de la partie inférieure du balai, et une troisième surface d'appui apte à coopérer par contact avec une seconde portion de la partie inférieure du balai, la première surface d'appui s'étendant en regard d'une zone située entre la seconde surface d'appui et la troisième surface d'appui.

Le dispositif d'emballage présente l'avantage d'être extrêmement commode à employer. Le fait que les moyens de maintien du dispositif d'emballage soient destinés à coopérer avec des parties de balai véritablement externes et opposées dans le plan sagittal, implique que les surfaces d'appui correspondantes soient positionnées sensiblement en vis-à-vis et à distance les unes des autres, les rendant par conséquent particulièrement accessibles.

Pour être mis en place, le balai doit simplement être redressé dans son plan sagittal sans qu'il soit nécessaire de lui conférer une courbure particulière. Une fois positionné entre les moyens de maintien, le balai est relâché jusqu'à ce que sa partie supérieure et sa partie inférieure rentrent en contact avec les surfaces d'appui correspondantes. La force de rappel élastique, engendrée par la mise en tension de la structure flexible entre les différentes surfaces d'appui, assure alors l'immobilisation du balai d'essuie-glace au sein du logement.

La seconde surface d'appui et la troisième surface d'appui sont par exemple ménagées au niveau des parties de la lame qui sont adjacentes à la lèvre, de manière à être à même de coopérer par contact avec le talon de la lame. On évite ainsi le contact entre la lèvre et le dispositif d'emballage.

Selon un mode particulier de réalisation, la seconde et la troisième surface d'appui sont en mesure de coopérer par contact avec la structure flexible intégrée au talon de la lame. C'est alors une des languettes de la structure flexible qui coopère par contact avec le dispositif d'emballage. On évite ainsi tout contact entre le dispositif d'emballage et la lame.

Cependant, selon la configuration particulière du balai d'essuie-glace à conditionner, comme son poids, sa taille ou la forme de son connecteur, il peut arriver que le talon de la lame entre tout de même en contact avec le dispositif d'emballage. La lame peut alors subir des pressions à ces endroits risquant de la déformer.

Afin de résoudre ces problèmes ainsi que d'autres, l'invention propose un dispositif d'emballage pour un balai d'essuie-glace à lame courbe et structure flexible intégrée permettant d'assurer la protection de la lame quelque soit la forme du balai d'essuie-glace.

A cet effet, la présente invention a pour objet un dispositif d'emballage pour un balai d'essuie-glace à lame courbe et structure flexible intégrée, ledit dispositif d'emballage comportant une coque délimitant un logement destiné à recevoir le balai et définissant des moyens de maintien chargés d'immobiliser ledit balai à l'intérieur dudit logement dans une position pouvant être au moins partiellement redressée par rapport à sa position de repos, les moyens de maintien comportant :
- une première surface d'appui apte à coopérer par contact avec une portion de la partie supérieure du balai,
- une seconde et une troisième surfaces d'appui ménagées dans le fond du logement et aptes à coopérer par contact avec la structure flexible dudit balai, la première surface d'appui s'étendant en regard d'une zone située entre la seconde surface d'appui et la troisième surface d'appui,
caractérisé en ce qu'au moins l'une des seconde et troisième surfaces d'appui présente une butée, appelée deuxième butée, qui est apte à coopérer par contact avec une extrémité latérale de la structure flexible, ladite deuxième butée étant agencée pour qu'en position de butée, au moins une partie d'un talon de la lame soit maintenue à l'écart de la coque, le balai comportant à sa partie supérieure un élément de liaison destiné à permettre son montage sur un mécanisme d'entraînement, caractérisé en ce que la première surface d'appui est apte à coopérer par contact avec ledit élément de liaison.

On entend ici par « à l'écart » que ladite partie du talon de la lame est située à une distance non nulle de ladite coque dans une direction d'extension latérale de la structure flexible.

Selon une ou plusieurs caractéristiques du dispositif d'emballage, prises seules ou en combinaison :
- la lame d'essuyage comporte un unique talon,
- la lame d'essuyage comporte une unique lèvre,
- la deuxième butée est agencée pour qu'en position de butée, le talon de la lame soit maintenu à l'écart de la coque. On entend ici que le talon de la lame est avantageusement écarté de la coque sur l'intégralité d'une face latérale de ladite lame,
- au moins l'une des seconde et troisième surfaces d'appui présente une butée, appelée première butée, qui est apte à coopérer par contact avec une face inférieure de la structure flexible, ladite première butée étant agencée pour qu'en position de butée, au moins une partie d'une lèvre de la lame soit maintenue à distance de la coque. On entend ici par « à distance » que ladite partie de la lèvre est située à une distance non nulle de ladite coque dans une direction d'extension longitudinale de ladite lame, c'est-à-dire dans une direction sensiblement perpendiculaire à une direction d'extension latérale de la structure flexible,
- la première butée est agencée pour qu'en position de butée, la lèvre de la lame soit maintenue à distance de la coque. Dans cette variante de réalisation, l'intégralité de ladite lèvre est donc avantageusement située à une distance non nulle de ladite coque dans une direction d'extension longitudinale de ladite lame, c'est-à-dire dans une direction sensiblement parallèle au plan sagittal du balai d'essuie-glace,
- les première et deuxième butées forment un coin de forme complémentaire à la forme de l'extrémité latérale de la structure flexible,
- la structure flexible comporte deux vertèbres intégrées longitudinalement dans la lame, respectivement au niveau de faces latérales opposées de la lame et l'extrémité latérale de la structure flexible appartient à l'une des vertèbres,
- la première butée est formée par un rebord longitudinal apte à coopérer par contact avec la face inférieure de la structure flexible dudit balai,
- la première butée de la deuxième surface d'appui et la première butée de la troisième surface d'appui sont formées sur un même rebord longitudinal,
- la (les) deuxième(s) butée(s) est (sont) formée(s) par une nervure transversale saillant de la paroi de fond du logement, ladite nervure transversale présentant une épaisseur en saillie au moins égale à la différence entre l'épaisseur en saillie du rebord longitudinal par rapport à la paroi de fond du logement, et la longueur de la structure flexible saillant de la lame du balai destiné à être reçu dans le logement,
- la première surface d'appui est apte à coopérer par contact avec une portion sensiblement centrale de la partie supérieure du balai, la seconde surface d'appui et la troisième surface d'appui sont respectivement aptes à coopérer par contact avec des portions sensiblement extrémales longitudinalement de la structure flexible dudit balai,
- la coque est sensiblement rigide,
- la coque est réalisée en une seule pièce.

L'invention a donc également pour objet un dispositif d'emballage pour un balai d'essuie-glace à lame courbe et structure flexible intégrée, ledit dispositif d'emballage comportant une coque délimitant un logement destiné à recevoir le balai et définissant des moyens de maintien chargés d'immobiliser ledit balai à l'intérieur dudit logement dans une position pouvant être au moins partiellement redressée par rapport à sa position de repos, les moyens de maintien comportant :
- une première surface d'appui apte à coopérer par contact avec une portion de la partie supérieure du balai,
- une seconde et une troisième surfaces d'appui ménagées dans le fond du logement et aptes à coopérer par contact avec la structure flexible dudit balai, la première surface d'appui s'étendant en regard d'une zone située entre la seconde surface d'appui et la troisième surface d'appui,
caractérisé en ce que la seconde et la troisième surfaces d'appui présentent respectivement une première butée apte à coopérer par contact avec une face inférieure de la structure flexible dudit balai et une deuxième butée apte à coopérer par contact avec l'extrémité latérale de la structure flexible, la deuxième butée étant agencée pour qu'en position de butée, le talon de la lame soit maintenu à l'écart de la coque.

L'invention a aussi pour objet un emballage pour balai d'essuie-glaces comportant un dispositif d'emballage tel que décrit précédemment et un balai d'essuie-glace à lame courbe et structure flexible intégrée, ledit balai étant reçu dans le logement dudit dispositif d'emballage.

Pour être mis en place, le balai doit simplement être redressé dans son plan sagittal. Une fois positionné entre les moyens de maintien, le balai est relâché jusqu'à ce que sa partie supérieure et la structure flexible entrent en contact avec les surfaces d'appui correspondantes. La force de rappel élastique engendrée par la mise en tension de la structure flexible entre les différentes surfaces d'appui assure alors l'immobilisation du balai d'essuie-glace au sein du logement.

Une fois mis en place, au niveau de la seconde et de la troisième surfaces d'appui, la structure flexible du balai est en butée d'une part contre le rebord longitudinal, assurant l'immobilisation transversale du balai dans le logement et d'autre part, contre la nervure transversale, limitant l'enfoncement du balai dans le fond du logement et empêchant ainsi le talon de la lame d'entrer en contact avec la coque. On s'assure ainsi d'empêcher tout contact entre le dispositif d'emballage et la lame, que ce soit au niveau de la lèvre ou au niveau de parties de la lame adjacentes à la lèvre, telles que le talon. La lame, libérée de toute contrainte à tous les points d'appui est assurée de ne pas être déformée par son conditionnement.

Cette description donnée à titre d'exemple non limitatif, fera mieux comprendre comment l'invention peut être réalisée, en référence aux dessins annexés sur lesquels
La figure 1 illustre schématiquement un exemple de balai d'essuie-glace susceptible d'être conditionné dans un dispositif d'emballage.
La figure 2 est une vue en coupe transversale centrale du balai d'essuie-glace de la figure 1.
La figure 3 représente un dispositif d'emballage.
La figure 4 montre le positionnement du balai d'essuie-glace des figures 1 et 2 à l'intérieur du logement du dispositif d'emballage de la figure 3. Sur cette figure, le dispositif d'emballage est posé à plat.
La figure 5 constitue une vue schématique en coupe transversale d'un autre exemple d'emballage, réalisée au niveau du centre du balai d'essuie-glace.
La figure 6 correspond à une vue schématique en coupe transversale de l'emballage de la figure 5, mais réalisée cette fois au niveau de l'une des zones de contact du balai d'essuie-glace.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

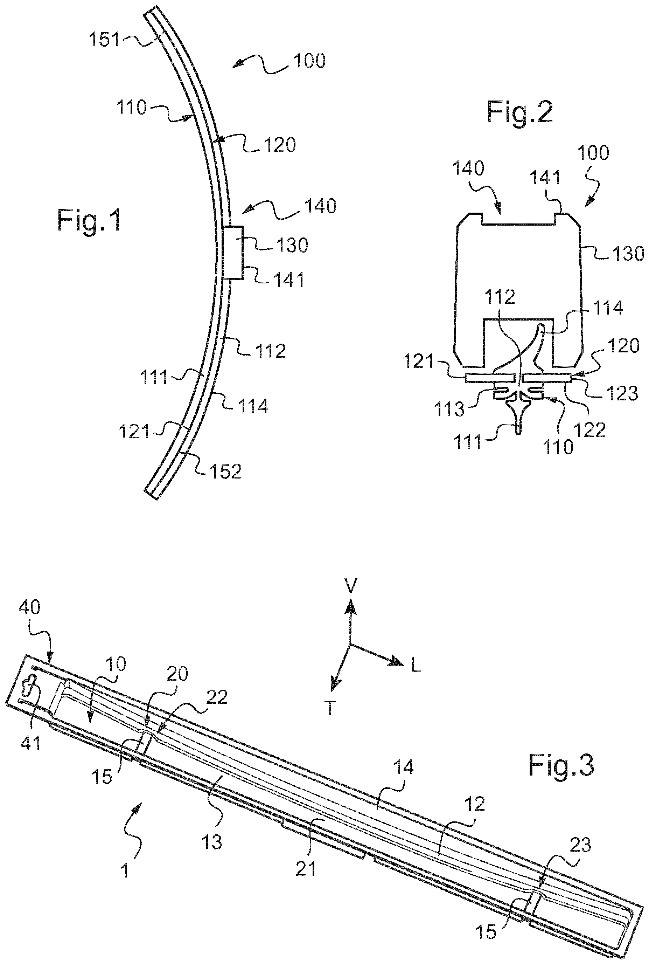

Dans la suite de la description, on adoptera à titre non limitatif des directions longitudinale, verticale et transversale indiquées sur la figure 3 par le trièdre (L, V, T) fixe par rapport au dispositif d'emballage. La direction longitudinale L correspond à la direction principale des balais d'essuie-glaces à plat. Tel que le dispositif de maintien 1 est illustré, le plan horizontal correspond au plan (L, T).

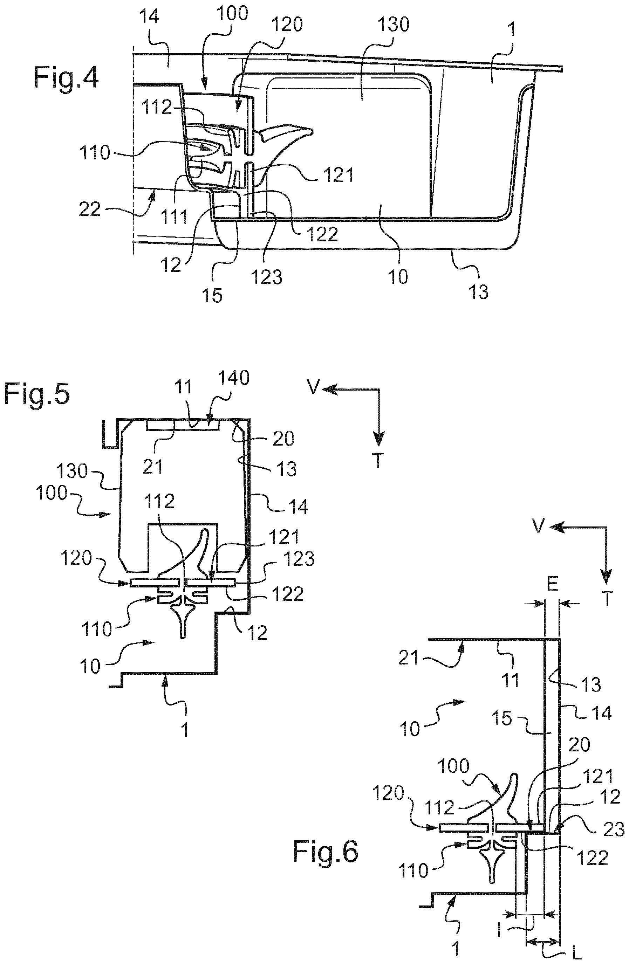

Les orientations « haute » et « basse » du dispositif d'emballage sont désignées en référence à l'orientation du dispositif d'emballage posé à plat tel que représenté sur la figure 4. L'orientation haute faite en référence au dispositif d'emballage, désigne le côté de l'ouverture du logement du dispositif d'emballage.

L'orientation « supérieure » faite en référence au balai d'essuie-glace désigne le côté du spoiler et l'orientation « inférieure » faite en référence au balai d'essuie-glace désigne le côté de la lame du balai.

La figure 1 illustre de manière schématique un balai d'essuie-glace 100 à lame courbe 110 et structure flexible intégrée 120, qui est plus particulièrement destiné à équiper un véhicule automobile. Il est à noter que dans ce domaine, un tel élément d'essuyage est souvent appelé balai plat en raison de sa faible hauteur ; caractéristique qui résulte précisément de l'absence d'armature à palonniers. Quoi qu'il en soit, sur cette représentation en position repos, on remarque bien la forme incurvée de la lame 110 qui est imposée par le profil courbé de la structure flexible 120.

Ainsi qu'on peut le voir plus clairement sur la figure 2, la lame 110 du balai 100 se compose classiquement d'une unique lèvre 111 destinée à coopérer directement par contact glissant avec une surface à essuyer, ainsi que d'un unique talon 112 formant interface entre ladite lèvre 111 et la structure flexible 120. De par leurs fonctions respectives, la lèvre 111 est particulièrement dure et résistante à l'usure, tandis que le talon 112 offre la souplesse nécessaire au retournement optimal de la lame 110 lors des inversions de sens de balayage. Il est à noter que cette souplesse résulte ici avant tout du découpage particulier du talon 112 de la lame 110, et notamment de la présence de rainures longitudinales 113.

On remarque également la présence d'un spoiler 114 qui fait tout aussi classiquement partie intégrante de la partie supérieure du talon 112. La lame 110 est en fait constituée d'un profil en élastomère qui regroupe en un ensemble monobloc, à la fois la lèvre 111, le talon 112 et le spoiler 114.

La structure flexible 120 comporte deux languettes élastiquement déformables 121 qui sont intégrées longitudinalement dans la lame, respectivement au niveau des faces latérales opposées de la lame 110. Chaque languette 121, appelée communément vertèbre, est chargée de répartir la pression d'appui de façon homogène sur toute la longueur de la lame 110 dans le but d'optimiser la qualité d'essuyage. Elles sont métalliques dans cet exemple de réalisation.

On distingue en outre la présence d'un élément de liaison 130 qui est là encore classiquement destiné à permettre le montage du balai 100 sur un mécanisme d'entraînement. Afin de pouvoir remplir sa fonction, l'élément de liaison 130 est solidarisé à la partie supérieure 140 du balai 100 et il présente une structure apte à coopérer par assemblage avec les moyens de liaison complémentaires, ménagés à l'extrémité du bras d'actionnement du mécanisme d'entraînement associé.

La figure 3 représente un dispositif d'emballage 1 destiné à servir de conditionnement au balai d'essuie- glace 100 précédemment décrit.

Le dispositif d'emballage 1 comporte une coque 14 qui dans cet exemple, est sensiblement rigide et réalisée en une seule pièce. Il s'agit d'une sorte d'enveloppe de faible épaisseur, qui offre toutefois une tenue mécanique compatible avec sa fonction d'emballage de protection. La coque 14 peut être perméable à la lumière, c'est-à-dire transparente ou translucide, permettant de garder le balai 100 visible lorsqu'il est conditionné dans le dispositif d'emballage 1, mettant en avant le particularisme esthétique de ce type de balai 100 à lame courbe 110 et structure flexible 120 intégrée, notamment par rapport aux balais droits communément utilisés. Dans cet exemple de réalisation, la coque 14 est ainsi réalisée en matière plastique, en l'occurrence du PET amorphe transparent, et elle présente une épaisseur de l'ordre de 500pm.

La coque 14 définit un logement 10 destiné à recevoir le balai 100, ainsi que de moyens de maintien 20 chargés d'immobiliser ledit balai 100 à l'intérieur du logement 10 dans une position partiellement redressée par rapport à sa position de repos.

Les moyens de maintien 20 comportent tout d'abord une première surface d'appui 21 qui est en mesure de coopérer par contact avec une portion 141 de la partie supérieure 140 du balai 100. Les moyens de maintien 20 sont en outre pourvus d'une seconde surface d'appui 22 ménagée dans le fond du logement 10 et qui est à même de coopérer par contact avec la structure flexible 120 du balai 100. Les moyens de maintien 20 sont enfin dotés d'une troisième surface d'appui 23, également ménagée dans le fond du logement 10 et qui est apte à coopérer par contact avec la structure flexible 120 du balai 100.

L'ensemble est ménagé de manière à ce que la première surface d'appui 21 s'étende en regard d'une zone située entre la seconde surface d'appui 22 et la troisième surface d'appui 23. Les trois surfaces d'appui 21, 22, 23 sont ainsi positionnées en triangle à distance les unes des autres, ce qui permet de réaliser efficacement un maintien en trois points.

La seconde et la troisième surfaces d'appui 22, 23 présentent ici respectivement une butée appelée première butée, qui est apte à coopérer par contact avec une face inférieure de la structure flexible 120 dudit balai 100 et une butée appelée deuxième butée, qui est apte à coopérer par contact avec l'extrémité latérale de la structure flexible 120.

La deuxième butée est ici agencée pour qu'en position de butée, le talon de la lame 110 soit maintenu à l'écart de la coque 14.

Dans l'illustration représentée en figures 4 et 6, les deux butées sont consécutives et perpendiculaires entre elles. Elles forment un coin de forme complémentaire à celle de l'extrémité de la vertèbre 121 de la structure flexible 120.

La première butée est formée par la surface supérieure d'un rebord longitudinal 12 apte à coopérer par contact avec une face inférieure 122 de la vertèbre 121 de la structure flexible 120 du balai 100. La deuxième butée est formée par la surface supérieure d'une nervure transversale 15 saillant de la paroi 13 du fond du logement 10. La nervure transversale 15 est apte à coopérer par contact avec l'extrémité latérale 123 de la vertèbre 121 de la structure flexible 120.

De part la nature de la coque 14, les deux nervures transversales 15 se présentent sous la forme de nervures creuses (figure 3), mais bien entendu des nervures pleines pourraient très bien être utilisées. Selon l'exemple illustré, les nervures 15 s'étendent de part en part transversalement dans le fond du logement 10.

Les nervures transversales 15 présentent respectivement une épaisseur E par rapport à la paroi 13 du fond (figure 6), au moins égale à la différence entre l'épaisseur L du rebord longitudinal 12 par rapport à la paroi 13 du fond et la longueur l de la vertèbre 121 saillant de la lame 110, de manière à ce qu'en position de butée, la lame 110 soit tenue à distance de la coque 14.

Pour être mis en place, le balai 100 doit simplement être redressé dans son plan sagittal. Une fois positionné entre les moyens de maintien 20, le balai 100 est relâché jusqu'à ce que sa partie supérieure 140 et la vertèbre 121 de la structure flexible 120 entrent en contact avec les surfaces d'appui 21, 22, 23 correspondantes. La force de rappel élastique engendrée par la mise en tension de la structure flexible 120 entre les différentes surfaces d'appui 21, 22, 23, assure alors l'immobilisation du balai d'essuie-glace 100 au sein du logement 10.

Une fois mis en place et comme on peut le voir sur la figure 4, au niveau de la seconde et de la troisième surface d'appui 22, 23, la face inférieure 122 de la vertèbre 121 est en position de butée contre le rebord longitudinal 12, bloquant le balai 100 transversalement dans le logement 10. En outre, l'extrémité latérale 123 de la vertèbre 121 est en position de butée contre la nervure transversale 15, ce qui limite l'introduction du balai 100 dans le fond du logement 10 et empêche ainsi le talon 112 d'entrer en contact avec la coque 14.

On s'assure ainsi d'empêcher tout contact entre le dispositif d'emballage 1 et la lame 110, que ce soit au niveau de la lèvre 111 ou au niveau de parties de la lame adjacentes à la lèvre, telles que le talon 112. La lame 110, libérée de toute contrainte à tout les points d'appui est assurée de ne pas être déformée par son conditionnement.

De plus, chaque languette métallique 121 présente une dureté bien supérieure à celle de l'élastomère constituant la lame 110, et constitue donc une surface de contact considérablement plus stable, d'où un bon maintien.

Selon d'autres caractéristiques particulières de l'exemple illustré, les trois surfaces d'appui 21, 22, 23 sont ménagées de façon à ce que la première surface d'appui 21 soit en mesure de coopérer par contact avec une portion 141 sensiblement centrale de la partie supérieure 140 du balai 100, et de façon à ce que la seconde surface d'appui 22 et la troisième surface d'appui 23 soient respectivement à même de coopérer par contact avec des portions 151, 152 généralement aux extrémités longitudinales de la structure flexible 120 du balai 100. Le fait que le maintien soit réalisé au niveau des extrémités respectivement supérieures 140 et inférieure 151, 152 du balai 100, permet de libérer l'espace situé sur les côtés du balai.

La première surface d'appui 21 est par exemple ménagée sensiblement à égale distance de la seconde surface d'appui 22 et de la troisième surface d'appui 23. Cette spécificité permet une répartition homogène des forces de pression qui sont engendrées par la déformation élastique de la structure flexible 120 et qui sont à l'origine du maintien du balai 100 à l'intérieur du logement 10.

La première surface d'appui 21 est par exemple constituée par une portion de paroi délimitant latéralement le logement 10.

Dans cet exemple de réalisation, le balai 100 comporte un élément de liaison 130 positionné à sa partie supérieure 140, de sorte qu'il est avantageux que la première surface d'appui 21 soit en mesure de coopérer par contact avec l'élément de liaison 130 en question.

Selon une autre particularité de l'invention, la seconde surface d'appui 22 et la troisième surface d'appui 23 sont constituées par des portions du même rebord 12 ménagé longitudinalement au fond du logement 10.

Comme on peut le voir sur la figure 3, le dispositif d'emballage 1 est doté par ailleurs de moyens d'accrochage 40 qui sont aptes à permettre sa suspension dans une position correspondant à un positionnement sensiblement vertical du balai 100. Dans cet exemple de réalisation, les moyens d'accrochage 40 sont constitués par un classique trou traversant 41 qui est conformé de manière à pouvoir coopérer avec un crochet de fixation d'un quelconque présentoir.

Les figures 5 et 6 illustrent en détail le maintien du balai 100 dans un logement 10 au niveau des différents points de contact.

La figure 5 s'intéresse plus particulièrement au positionnement relatif en partie centrale. Elle montre notamment le blocage réalisé entre la paroi latérale 11 délimitant le logement 10 et la partie supérieure 140 du balai 100, matérialisée par l'élément de liaison 130. La lame du balai 100 ne subit quant à elle aucune contrainte à cet endroit précis.

La figure 6 montre quant à elle le positionnement de chaque extrémité longitudinale du balai 100 dans le logement 10. On note que dans cette zone, seule la vertèbre 121 du balai 100 est en contact avec le rebord 12 ménagé longitudinalement au fond du logement 10 et avec la nervure transversale 15 saillant de la paroi 13 du fond du logement. La lame du balai 100 ne subit aucune contrainte à ces autres points d'appui.

## Revendications

1. Dispositif d'emballage (1) pour un balai d'essuie-glace (100) à lame courbe (110) et structure flexible (120) intégrée, ledit dispositif d'emballage (1) comportant une coque (14) délimitant un logement (10) destiné à recevoir le balai (100) et définissant des moyens de maintien (20) chargés d'immobiliser ledit balai (100) à l'intérieur dudit logement (10) dans une position pouvant être au moins partiellement redressée par rapport à sa position de repos, les moyens de maintien (20) comportant :
- une première surface d'appui (21) apte à coopérer par contact avec une portion (141) de la partie supérieure (140) du balai (100),
- une seconde et une troisième surfaces d'appui (22, 23) ménagées dans le fond du logement (10) et aptes à coopérer par contact avec la structure flexible (120) dudit balai (100), la première surface d'appui (21) s'étendant en regard d'une zone située entre la seconde surface d'appui (22) et la troisième surface d'appui (23),
au moins l'une des seconde et troisième surfaces d'appui (22, 23) présentant une butée, appelée deuxième butée, qui est apte à coopérer par contact avec une extrémité latérale (123) de la structure flexible (120), ladite deuxième butée étant agencée pour qu'en position de butée, au moins une partie d'un talon (112) de la lame (110) soit maintenue à l'écart de la coque (14), le balai (100) comportant à sa partie supérieure (140) un élément de liaison (130) destiné à permettre son montage sur un mécanisme d'entraînement, **caractérisé en ce que** la première surface d'appui (21) est apte à coopérer par contact avec ledit élément de liaison (130).

2. Dispositif d'emballage selon la revendication 1, **caractérisé en ce qu'**au moins l'une des seconde et troisième surfaces d'appui (22, 23) présente une butée, appelée première butée, qui est apte à coopérer par contact avec une face inférieure (122) de la structure flexible (120), ladite première butée étant agencée pour qu'en position de butée, au moins une partie d'une lèvre (111) de la lame (110) soit maintenue à distance de la coque (14).

3. Dispositif d'emballage selon l'une quelconque des revendications 1 et 2, **caractérisé en ce que** lesdites première et deuxième butées forment un coin de forme complémentaire à la forme de l'extrémité latérale (123) de la structure flexible (120).

4. Dispositif d'emballage selon la revendication 3, **caractérisé en ce que** la structure flexible (120) comporte deux vertèbres (121) intégrées longitudinalement dans la lame (110), respectivement au niveau de faces latérales opposées de ladite lame (110) et **en ce que** ladite extrémité latérale (123) appartient à l'une desdites vertèbres (121).

5. Dispositif d'emballage selon l'une quelconque des revendications 2 à 4, **caractérisé en ce que** ladite première butée est formée par un rebord longitudinal (12).

6. Dispositif d'emballage selon l'une quelconque des revendications 2 à 5, **caractérisé en ce que** la seconde et la troisième surfaces d'appui (22, 23) présentent respectivement une première butée apte à coopérer par contact avec une face inférieure (122) de la structure flexible (120) dudit balai (100) et une deuxième butée apte à coopérer par contact avec l'extrémité latérale (123) de la structure flexible (120), la deuxième butée étant agencée pour qu'en position de butée, le talon (112) de la lame 110 soit maintenu à l'écart de la coque (14).

7. Dispositif d'emballage selon la revendication 6, **caractérisé en ce que** ladite première butée de la deuxième surface d'appui (22) et ladite première butée de la troisième surface d'appui (23) sont formées sur le même rebord longitudinal (12).

8. Dispositif d'emballage selon l'une quelconque des revendications 5 à 7, **caractérisé en ce que** ladite (lesdites) deuxième(s) butée(s) est (sont) formée(s) par une nervure transversale (15) saillant de la paroi (13) de fond du logement (10), ladite nervure transversale (15) présentant une épaisseur (E) en saillie au moins égale à la différence entre l'épaisseur en saillie (L) du rebord longitudinal (12) par rapport à la paroi (13) de fond du logement (10) et la longueur (l) de la structure flexible (120) saillant de la lame (110) du balai (100) destiné à être reçu dans le logement (10).

9. Dispositif d'emballage (1) selon l'une des revendications 1 à 8, **caractérisé en ce que** la première surface d'appui (21) est apte à coopérer par contact avec une portion (141) sensiblement centrale de la partie supérieure (140) du balai (100), et **en ce que** la seconde surface d'appui (22) et la troisième surface d'appui (23) sont respectivement aptes à coopérer par contact avec des portions (151, 152) sensiblement extrémales longitudinalement de la structure flexible (120) dudit balai (100).

10. Dispositif d'emballage (1) selon l'une des revendications 1 à 9, **caractérisé en ce que** la coque (14) est sensiblement rigide.

11. Dispositif d'emballage selon la revendication 10, **caractérisé en ce que** la coque (14) est réalisée en une seule pièce.

12. Emballage pour balai d'essuie-glaces comportant un dispositif d'emballage selon l'une des revendications 1 à 11 et un balai d'essuie-glace (100) à lame courbe (110) et structure flexible (120) intégrée, ledit balai (100) étant reçu dans le logement (10) dudit dispositif d'emballage (1).

## Patentansprüche

1. Verpackungsvorrichtung (1) für ein Scheibenwischerblatt (100) mit gekrümmtem Blatt (110) und integrierter flexibler Struktur (120), wobei die Verpackungsvorrichtung (1) eine Schale (14) umfasst, die eine Aufnahme (10) begrenzt, die dazu bestimmt ist, das Wischerblatt (100) aufzunehmen, und die Haltemittel (20) definiert, die das Wischerblatt (100) innerhalb der Aufnahme (10) in einer Position, die zumindest teilweise in Bezug zu seiner Ruheposition aufgerichtet sein kann, feststellten sollen, wobei die Haltemittel (20) umfassen:
- eine erste Stützfläche (21), die geeignet ist, durch Kontakt mit einem Abschnitt (141) des oberen Teils (140) des Wischerblatts (100) zusammenzuwirken,
- eine zweite und eine dritte Stützfläche (22, 23), die im Boden der Aufnahme (10) vorgesehen und geeignet sind, durch Kontakt mit der flexiblen Struktur (120) des Wischerblatts (100) zusammenzuwirken, wobei sich die erste Stützfläche (21) gegenüber eine Zone erstreckt, die sich zwischen der zweiten Stützfläche (22) und der dritten Stützfläche (23) befindet,
wobei mindestens eine der zweiten und dritten Stützflächen (22, 23) einen Anschlag, zweiter Anschlag genannt, aufweist, der geeignet ist, durch Kontakt mit einem seitlichen Ende (123) der flexiblen Struktur (120) zusammenzuwirken, wobei der zweite Anschlag dazu vorgesehen ist, dass in der Anschlagposition zumindest ein Teil eines hinteren Abschnitts (112) des Blattes (110) von der Schale (14) beabstandet gehalten wird, wobei das Wischerblatt (100) an seinem oberen Teil (140) ein Verbindungselement (130) umfasst, das dazu bestimmt ist, seine Montage auf einem Antriebsmechanismus zu ermöglichen, **dadurch gekennzeichnet, dass** die erste Stützfläche (21) geeignet ist, durch Kontakt mit dem Verbindungselement (130) zusammenzuwirken.

2. Verpackungsvorrichtung nach Anspruch 1, **dadurch gekennzeichnet, dass** mindestens eine der zweiten und dritten Stützflächen (22, 23) einen Anschlag, erster Anschlag genannt, aufweist, der geeignet ist, durch Kontakt mit einer Unterseite (122) der flexiblen Struktur (120) zusammenzuwirken, wobei der erste Anschlag dazu vorgesehen ist, dass in Anschlagposition mindestens ein Teil einer Lippe (111) des Blatts (110) von der Schale (14) beabstandet gehalten wird.

3. Verpackungsvorrichtung nach einem der Ansprüche 1 und 2, **dadurch gekennzeichnet, dass** die ersten und zweiten Anschläge einen Winkel von komplementärer Vorm zu der Form des seitlichen Endes (123) der flexiblen Struktur (120) bilden.

4. Verpackungsvorrichtung nach Anspruch 3, **dadurch gekennzeichnet, dass** die flexible Struktur (120) zwei Wirbel (121) umfasst, die längs in das Blatt (110) jeweils im Bereich von gegenüberliegenden Seitenflächen des Blatts (110) integriert sind, und dass das seitliche Ende (123) einem der Wirbel (121) angehört.

5. Verpackungsvorrichtung nach einem der Ansprüche 2 bis 4, **dadurch gekennzeichnet, dass** der erste Anschlag von einem Längsrand (12) gebildet ist.

6. Verpackungsvorrichtung nach einem der Ansprüche 2 bis 5, **dadurch gekennzeichnet, dass** die zweite und die dritte Stützfläche (22, 23) einen ersten Anschlag, der geeignet ist, durch Kontakt mit einer Unterseite (122) der flexiblen Struktur (120) des Blatts (100) zusammenzuwirken, bzw. einen zweiten Anschlag aufweisen, der geeignet ist, durch Kontakt mit dem seitlichen Ende (123) der flexiblen Struktur (120) zusammenzuwirken, wobei der zweite Anschlag dazu vorgesehen ist, dass in Anschlagposition der hintere Abschnitt (112) des Blatts (110) von der Schale (14) beabstandet gehalten wird.

7. Verpackungsvorrichtung nach Anspruch 6, **dadurch gekennzeichnet, dass** der erste Anschlag der zweiten Stützfläche (22) und der erste Anschlag der dritten Stützfläche (23) auf demselben Längsrand (12) ausgebildet sind.

8. Verpackungsvorrichtung nach einem der Ansprüche 5 bis 7, **dadurch gekennzeichnet, dass** der (die) zweite(n) Anschlag (Anschläge) von einer Querrippe (15) gebildet ist (sind), die aus der Bodenwand (13) der Aufnahme (10) herausragt, wobei die Querrippe (15) eine herausragende Dicke (E) mindestens gleich dem Unterschied zwischen der herausragenden Dicke (L) des Längsrandes (12) in Bezug auf die Bodenwand (13) der Aufnahme (10) und der Länge (l) der flexiblen Struktur (120), die aus dem Blatt (110) des Scheibenwischers (100) herausragt, der dazu bestimmt ist, in der Aufnahme (10) aufgenommen zu werden.

9. Verpackungsvorrichtung (1) nach einem der Ansprüche 1 bis 8, **dadurch gekennzeichnet, dass** die erste Stützfläche (21) geeignet ist, durch Kontakt mit einem im Wesentlichen zentralen Abschnitt (141) des oberen Teils (140) des Wischerblatts (100) zusammenzuwirken, und dass die zweite Stützfläche (22) und die dritte Stützfläche (23) jeweils geeignet sind, durch Kontakt mit im Wesentlichen in Längsrichtung angeordneten Endabschnitten (151, 152) der flexiblen Struktur (120) des Wischerblatts (100) zusammenzuwirken.

10. Verpackungsvorrichtung (1) nach einem der Ansprüche 1 bis 9, **dadurch gekennzeichnet, dass** die Schale (14) im Wesentlichen starr ist.

11. Verpackungsvorrichtung nach Anspruch 10, **dadurch gekennzeichnet, dass** die Schale (14) aus einem Stück hergestellt ist.

12. Verpackung für ein Scheibenwischerblatt, umfassend eine Verpackungsvorrichtung nach einem der Ansprüche 1 bis 11 und ein Scheibenwischerblatt (100) mit einem gekrümmten Blatt (110) und einer integrierten flexiblen Struktur (120), wobei das Wischerblatt (100) in der Aufnahme (10) der Verpackungsvorrichtung (1) aufgenommen ist.

## Claims

1. A packaging device (1) for a windshield wiper (100) having a curved blade (110) and an integrated flexible structure (120), said packaging device (1) having a shell (14) delimiting a housing (10) intended to receive the wiper (100) and defining holding means (20) for fixing said wiper (100) inside said housing (10) in a position that can be at least partially straightened compared with its rest position, the holding means (20) having:
- a first bearing surface (21) that is able to cooperate by contact with a portion (141) of the upper part (140) of the wiper (100),
- a second and a third bearing surface (22, 23) that are provided in the bottom of the housing (10) and are able to cooperate by contact with the flexible structure (120) of said wiper (100), the first bearing surface (21) extending opposite a region located between the second bearing surface (22) and the third bearing surface (23),
at least one of the second and third bearing surfaces (22, 23) having an abutment, known as the second abutment, which is able to cooperate by contact with a lateral end (123) of the flexible structure (120), said second abutment being designed such that, in the position of abutment, at least a part of a heel (112) of the blade (110) is kept spaced apart from the shell (14), the wiper (100) having on its upper part (140) a connecting element (130) intended to allow it to be mounted on a drive mechanism, and in that the first bearing surface (21) is able to cooperate by contact with said connecting element (130).

2. The packaging device as claimed in claim 1, **characterized in that** at least one of the second and third bearing surfaces (22, 23) has an abutment, known as the first abutment, which is able to cooperate by contact with a lower face (122) of the flexible structure (120), said first abutment being designed such that, in the position of abutment, at least a part of a lip (111) of the blade (110) is kept at a distance from the shell (14).

3. The packaging device as claimed in either of claims 1 and 2, **characterized in that** said first and second abutments form an angle having a shape complementary to the shape of the lateral end (123) of the flexible structure (120).

4. The packaging device as claimed in claim 3, **characterized in that** the flexible structure (120) has two vertebrae (121) integrated longitudinally into the blade (110), respectively on opposite lateral faces of said blade (110), and **in that** said lateral end (123) belongs to one of said vertebrae (121).

5. The packaging device as claimed in any one of claims 2 to 4, **characterized in that** said first abutment is formed by a longitudinal edge (12).

6. The packaging device as claimed in any one of claims 2 to 5, **characterized in that** the second and third bearing surfaces (22, 23) respectively have a first abutment that is able to cooperate by contact with a lower face (122) of the flexible structure (120) of said wiper (100) and a second abutment that is able to cooperate by contact with the lateral end (123) of the flexible structure (120), the second abutment being designed such that, in the position of abutment, the heel (112) of the blade (110) is kept spaced apart from the shell (14).

7. The packaging device as claimed in claim 6, **characterized in that** said first abutment of the second bearing surface (22) and said first abutment of the third bearing surface (23) are formed on the same longitudinal edge (12).

8. The packaging device as claimed in any one of claims 5 to 7, **characterized in that** said second abutment(s) is (are) formed by a transverse rib (15) projecting from the bottom wall (13) of the housing (10), said transverse rib (15) having a projecting thickness (E) at least equal to the difference between the projecting thickness (L) of the longitudinal edge (12) with respect to the bottom wall (13) of the housing (10) and the length (I) of the flexible structure (120) projecting from the blade (110) of the wiper (100) intended to be received in the housing (10).

9. The packaging device (1) as claimed in any one of claims 1 to 8, **characterized in that** the first bearing surface (21) is able to cooperate by contact with an approximately central portion (141) of the upper part (140) of the wiper (100), and **in that** the second bearing surface (22) and the third bearing surface (23) are respectively able to cooperate by contact with portions (151, 152) approximately at the longitudinal ends of the flexible structure (120) of said wiper (100).

10. The packaging device (1) as claimed in one of claims 1 to 9 **characterized in that** the shell (14) is substantially rigid.

11. The packaging device as claimed in claim 10, **characterized in that** the shell (14) is produced in one piece.

12. Packaging for a windshield wiper, having a packaging device as claimed in one of claims 1 to 11 and a windshield wiper (100) having a curved blade (110) and an integrated flexible structure (120), said wiper (100) being received in the housing (10) of said packaging device (1).
